# FASCICULE DE BREVET EUROPEEN

(11) **EP 3 498 633 B1**
(45) Date de publication et mention de la délivrance du brevet: **04.03.2020**
(21) Numéro de dépôt: 18209058.9
(22) Date de dépôt: 29.11.2018
(51) Int. Cl.: B65D 88/12, B65D 88/14, B65D 90/02

(54) **CONTENEUR DE STOCKAGE**
SPEICHERCONTAINER
STORING CONTAINER

(30) Priorité: 18.12.2017 FR 1762362
(43) Date de publication de la demande: 19.06.2019
(73) Titulaire: Airbus Operations S.A.S., 31060 Toulouse (FR)
(72) Inventeur: MARTY, Jean-Claude, 31000 TOULOUSE (FR); LOCHE, Jean-Christophe, 31620 VILLENEUVE LES BOULOC (FR); DUPAS, Thony, 31100 TOULOUSE (FR); POUCHAN, Laurent, 31300 TOULOUSE (FR)
(74) Mandataire: Gicquel, Olivier Yves Gérard

(56) Documents cités:
- DE-T2- 69 011 848
- DE-T2- 69 402 607
- US-A1- 2012 055 919
- US-B2- 7 507 062

## Description

La présente invention concerne le domaine des conteneurs de stockage et de transport de radôme et notamment de radôme d'aéronef.

### DOMAINE TECHNIQUE

La plupart des aéronefs et en particulier les avions de transport commerciaux comprennent un radôme situé en pointe avant. Le radôme a notamment pour fonction de protéger un radar et présente une structure en matériau perméable aux ondes électromagnétiques et par exemple en matériau composite.

La structure du radôme peut se trouver endommager par des incidents de types divers tels qu'un impact d'oiseau ou la grêle et présenter un enfoncement, une déchirure, des rayures ou tout autre détérioration nécessitant de le remplacer. Des radômes de remplacement sont en général prévus en stock : en cas de besoin, un radôme de remplacement est acheminé jusqu'à l'aéronef concerné dans un conteneur de stockage et de transport.

### TECHNIQUE ANTERIEURE

Le brevet EP1728735 montre un exemple de conteneur de stockage et de transport. Comme indiqué dans ce brevet, le conteneur de stockage et de transport est acheminé dans la soute d'un aéronef. Compte-tenu de la géométrie particulière de la soute et notamment d'une largeur de soute insuffisante pour recevoir la base dudit conteneur, il est nécessaire de le surélever en le munissant de plots support. Le document US7,507,062B2 divulgue un conteneur de transport d'un radôme. Les documents DE69011848T2, US2012/0055919A1 et DE69402607T2 divulguent d'autres conteneurs de transport.

La présente invention a pour but d'améliorer la forme du conteneur et d'éviter notamment le recours à des plots support pour optimiser son encombrement et offrir une forme simple et peu onéreuse de réalisation et d'utilisation.

### EXPOSE DE l'INVENTION

Pour ce faire, la présente invention concerne un conteneur de stockage et de transport de radôme selon la revendication 1 comprenant une paroi supérieure et inférieure plane et parallèle l'une par rapport à l'autre et une paroi périphérique, l'ensemble de ces parois formant enveloppe, caractérisé en ce que la paroi supérieure présente un contour courbe fermé et une surface de dimension supérieure à celle de la paroi inférieure dont le contour forme un parallélogramme.

La présente invention permet d'offrir une forme de conteneur susceptible de stocker le radôme le nez en bas afin de permettre un profil évasé vers le haut en correspondance avec la géométrie de la soute pour en suivre ses contours.

Le conteneur comporte une double paroi périphérique, une paroi interne en forme de dôme et une paroi externe au moins partiellement inclinée de la paroi supérieure à la paroi inférieure vers l'intérieur.

La paroi supérieure est amovible pour former couvercle.

La paroi supérieure dispose d'un rebord vertical en périphérie et la paroi périphérique présente un bord extrémal supérieur vertical de dimension correspondante telle que le rebord vertical de la paroi supérieure vienne encercler le bord de la paroi périphérique.

La paroi inférieure présente une forme de rectangle.

La paroi supérieure présente une forme de disque.

La paroi périphérique est constituée de quatre panneaux dont l'arête inférieure est rectiligne et l'arête supérieure courbe.

Le conteneur comprend un socle parallélépipédique intégré.

### DESCRIPTION SOMMAIRE DES DESSINS

D'autres buts, avantages et caractéristiques de l'invention apparaîtront à la lecture de la description qui va suivre du conteneur selon l'invention, donné à titre d'exemple non limitatif en référence aux dessins ci-annexés dans lesquels :

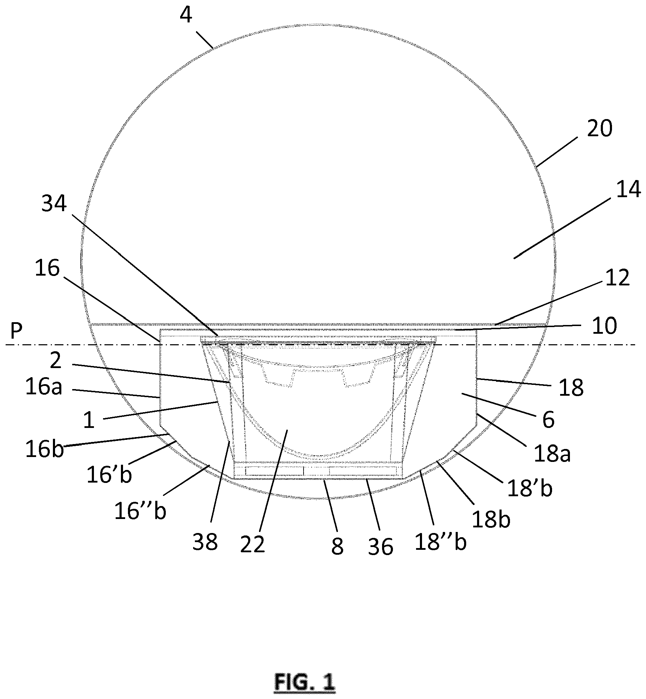

- la figure 1 représente une vue schématique simplifiée d'une section d'aéronef mettant en évidence la géométrie d'un conteneur selon la présente invention par rapport à celle d'une soute d'aéronef et dans laquelle le radome est représenté en perspective et en pointillés, le bord périphérique libre duquel est compris dans un plan P qui est lui représenté en section ;

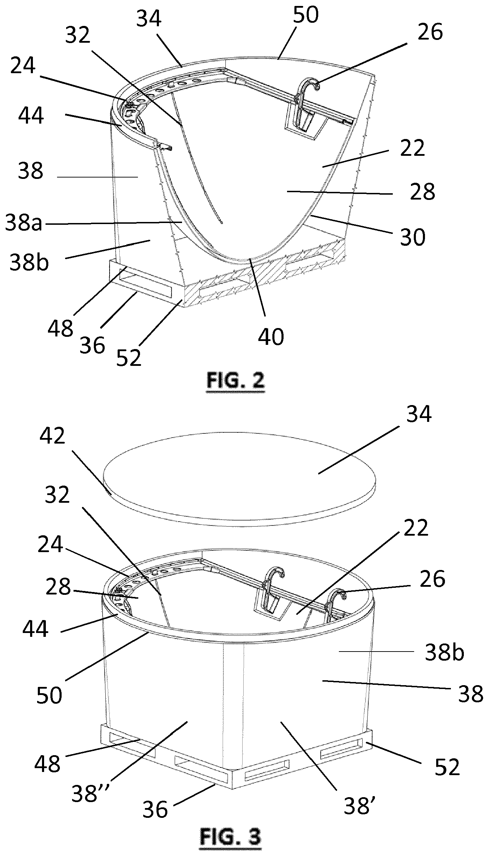

- la figure 2 représente une vue schématique en perspective simplifiée d'un conteneur selon la présente invention dans lequel se trouve un radôme, coupé en son milieu par un plan central vertical et dont seule une moitié est représentée pour laisser apparaître à la fois l'intérieur et l'extérieur de celui-ci ;
- la figure 3 représente une vue en perspective schématique simplifiée du conteneur selon la présente invention dans lequel se trouve un radôme et dont le couvercle est désolidarisé du reste du conteneur.

### MANIERE DE REALISER L'INVENTION

Comme le montrent les figures 1 à 3, la présente invention se rapporte à un conteneur 1 de stockage et de transport d'un radôme 2 et plus particulièrement dans l'exemple décrit ci-dessous d'un radôme 2 d'aéronef 4. Comme indiqué plus haut, le conteneur 1 de stockage et de transport est acheminé dans la soute 6 de l'aéronef 4.

Dans la suite de la description, on supposera que l'aéronef 4 dans la soute 6 duquel se trouve un conteneur 1 selon la présente invention repose sur un sol horizontal et que tout plan parallèle au sol est horizontal et tout plan perpendiculaire au sol est vertical.

L'espace libre de la soute 6 dans la plupart des avions de transport commerciaux de type connu comme celui de la soute de l'avion « A320 » (marque déposée) est délimité par un plancher 8 horizontal de base, un plafond 10 parallèle au plancher 8 de la soute correspondant au plancher 12 de la cabine 14 et deux parois 16, 18 longitudinales à l'aéronef 4 présentant deux parties, une première partie 16a, 18a verticale s'étendant depuis le plafond 10 jusqu'à proximité du fuselage 20 de l'aéronef 4 et une deuxième partie 16b, 18b comprenant deux pans (16'b, 16"b), (18'b, 18"b) plans successifs inclinés par rapport à la verticale s'étendant depuis la première partie 16a, 18a jusqu'au plancher 8 de la soute 6 de manière à suivre le contour courbe du fuselage 20 dans la zone inférieure de la soute 6.

Le radôme 2 comprend un panneau 22 en matériau perméable aux ondes électromagnétiques et par exemple en matériau composite. Le panneau 22 présente une double courbure de manière à former une concavité en forme de dôme. Le bord 24 périphérique libre du radôme 2 est joint, en général de manière articulé, par tout type de moyen connu et par exemple par un système de charnière 26, au reste du fuselage 20 de l'aéronef. Dans la description qui suit, on considère que le radôme 2 a été démonté et retiré de l'aéronef comme montré sur les figures 1 à 3. Le panneau 22 présente une face 28 interne et une face 30 externe. La face 28 interne du panneau 22 est creuse. Dans les formes illustrées sur les figures 1 à 3, le bord 24 périphérique libre ou au moins une partie du bord appartient à un plan P (représenté sur la figure 1) : de ce fait, le radôme peut reposer contre une surface plane et en particulier sur le sol par son bord périphérique ou la partie appartenant au plan P de celui-ci, la partie en question du bord étant de dimension suffisamment importante pour ce faire.

Le radôme 2 ne sera pas décrit plus en détail : il peut comprendre d'autres composants tels que des bandes 32 parafoudre ou autres dont la description n'est pas nécessaire pour présenter le conteneur 1.

Le conteneur 1 de radôme 2 comprend une paroi supérieure 34 et inférieure 36 plane et parallèle l'une par rapport à l'autre et une paroi 38 périphérique, l'ensemble de ces parois formant une enveloppe entourant le radôme 2 et permettant de protéger et transporter celui-ci. La paroi 34 supérieure est plane pour pouvoir être disposé parallèlement et en vis-à-vis du plafond 10 de la soute. La paroi 36 inférieure est plane pour venir reposer sur le plancher 8 de la soute. Ainsi la planéité et le parallélisme des parois supérieures 34 et inférieure 36 du conteneur 1 permettent d'optimiser le volume intérieur possible du conteneur.

Contrairement aux conteneurs existants, le conteneur 1 selon la présente invention présente une géométrie adaptée à un radôme disposé en sens inverse verticalement à l'intérieur du conteneur. En d'autres termes, le nez 40 du radôme pointe vers le bas ce qui signifie que le bord périphérique 24 libre du radôme se trouve du côté de la paroi 34 supérieure du conteneur.

La paroi 34 supérieure présente un contour courbe fermé et une surface de dimension supérieure à celle de la paroi 36 inférieure dont le contour forme un parallélogramme. La forme de la paroi 34 supérieure est adaptée à la forme du bord 24 périphérique libre du radôme 2. Selon une forme de réalisation illustrée, le bord 24 périphérique de la paroi 34 supérieure est parallèle au bord 24 périphérique libre du radôme. De cette manière, l'encombrement de la paroi 34 supérieure du conteneur est optimisé puisqu'elle peut ainsi se trouver au plus proche du radôme 2 disposé à l'intérieur. Le contour en forme de parallélogramme de la paroi 36 inférieure du conteneur contraste avec le contour courbe de la paroi 34 supérieure. Il permet d'offrir une base stable sur laquelle repose le conteneur. De plus les dimensions de la surface de la paroi inférieure 36 étant inférieures à celles de la paroi supérieure 34 le conteneur suit la forme du radôme 2 disposé en sens inverse à l'intérieur de celui-ci tout en s'adaptant au mieux à la géométrie particulière de la soute 6.

Comme illustré sur les figures 2 et 3, le conteneur 1 comporte une double paroi 38 périphérique, une paroi 38a interne en forme de dôme et une paroi 38b externe au moins partiellement inclinée par rapport à la verticale de la paroi 34 supérieure à la paroi 36 inférieure vers l'intérieur. La paroi 38a interne présente une forme adaptée à la forme de dôme du radôme. Selon la forme de réalisation illustrée, la forme de la paroi 38a interne correspond à celle du radôme. Ainsi il n'est pas nécessaire de prévoir de moyens de fixation spécifiques du radôme à l'intérieur du conteneur. Le radôme repose à l'intérieur de la paroi 38a interne et ne peut plus bouger. Il est maintenu par la forme correspondante de la paroi 38a interne. La paroi 38b externe permet de lier la forme du contour courbe fermé de la paroi 34 supérieure du conteneur à la forme en parallélogramme de la paroi 36 inférieure pour envelopper la paroi 38a interne dans laquelle le radôme est maintenu. La paroi 38b périphérique externe du fait de son inclinaison vers l'intérieur suit la forme aux dimensions décroissantes verticalement de la paroi 38a interne du conteneur et des parois 16, 18 longitudinales de la soute. Ainsi la géométrie du conteneur 1 est optimisée par rapport à celle de la soute 6.

Comme le montre bien la figure 3, la paroi 34 supérieure est amovible pour former couvercle. De cette manière il est très facile de l'enlever sans risquer d'endommager le radôme.

La paroi 34 supérieure du conteneur dispose d'un rebord 42 vertical en périphérie. La paroi 38 périphérique du conteneur présente un bord 44 extrémal supérieur vertical de dimension correspondante au rebord 42 vertical de la paroi 34 supérieure. Les dimensions du rebord 42 de la paroi 34 supérieure par rapport au bord 44 extrémal supérieur de la paroi périphérique sont telles que le rebord 42 vertical de la paroi supérieure encercle le bord 44 de la paroi périphérique. Le rebord 42 de la paroi supérieure permet ainsi de caler la paroi supérieure par rapport à la paroi 38 périphérique et de maintenir le couvercle sur le conteneur. Des moyens de fixation de tout type connu peuvent être prévus pour solidariser la paroi 34 supérieure à la paroi 38 périphérique.

Selon la forme de réalisation illustrée sur les figures 2 et 3, la paroi 36 inférieure du conteneur présente une forme de rectangle et s'adapte ainsi parfaitement à la géométrie du plancher de la soute. Elle pourrait également être de forme carrée ou de toute autre forme.

Toujours selon la forme de réalisation illustrée sur les figures 2 et 3, la paroi 34 supérieure du conteneur présente une forme de disque. Comme vu précédemment, elle présente ainsi un bord périphérique circulaire en adéquation avec le bord 24 circulaire périphérique libre de la plupart des radômes.

Dans la forme de réalisation illustrée sur les figures 2 et 3, la paroi 38 périphérique est constituée de quatre panneaux, dont deux seulement 38' et 38" sont visibles sur la figure 3. L'arête 48 inférieure de chacun de ces panneaux est rectiligne alors que l'arête 50 supérieure est courbe, ce qui donne à chaque panneau une géométrie particulière.

Dans la forme de réalisation illustrée sur les figures 2 et 3, le conteneur comprend un socle 52 parallélépipédique intégré dont le contour de la face supérieure est constitué par les arêtes 48 inférieure des panneaux de la paroi 38 périphérique et dont la face inférieure forme la paroi 36 inférieure du conteneur. Le socle permet la manipulation par une fourche de manutention mais reste de hauteur bien inférieure au plot de surélévation de l'art antérieur car il n'a pas pour fonction de surélever le conteneur. Compte-tenu de la forme du conteneur adaptée à la forme de la soute, la surélévation n'est pas nécessaire.

## Revendications

1. Conteneur (1) de stockage et de transport de radôme (2) comprenant une paroi (34) supérieure et (36) inférieure plane et parallèle l'une par rapport à l'autre et une paroi (38) périphérique, l'ensemble de ces parois formant enveloppe, **caractérisé en ce que** la paroi (34) supérieure présente un contour courbe fermé et une surface de dimension supérieure à celle de la paroi (36) inférieure dont le contour forme un parallélogramme, et **en ce que** le conteneur comporte une double paroi (38) périphérique, une paroi (38a) interne en forme de dôme et une paroi (38b) externe au moins partiellement inclinée de la paroi (34) supérieure à la paroi (36) inférieure vers l'intérieur.

2. Conteneur selon la revendication 1, **caractérisé en ce que** la paroi (34) supérieure est amovible pour former couvercle.

3. Conteneur selon la revendication 2, **caractérisé en ce que** la paroi (34) supérieure dispose d'un rebord (42) vertical en périphérie et la paroi (38) périphérique présente un bord (44) extrémal supérieur vertical de dimension correspondante telle que le rebord (42) vertical de la paroi supérieure vienne encercler le bord (44) de la paroi périphérique.

4. Conteneur selon l'une des revendications 1 à 3, **caractérisé en ce que** la paroi (36) inférieure présente une forme de rectangle.

5. Conteneur selon l'une des revendications 1 ou 4, **caractérisé en ce que** la paroi (34) supérieure présente une forme de disque.

6. Conteneur selon l'une des revendications 1 à 5, **caractérisé en ce que** la paroi (38) périphérique est constituée de quatre panneaux (38', 38") dont l'arête (48) inférieure est rectiligne et l'arête (50) supérieure courbe.

7. Conteneur selon l'une des revendications 1 à 6, **caractérisé en ce qu'**il comprend un socle (52) parallélépipédique intégré.

## Patentansprüche

1. Behälter (1) zur Aufbewahrung und zum Transport eines Radoms (2), umfassend eine obere (34) und eine untere Wand (36), die flach und parallel zueinander sind0, und eine Umfangswand (38), wobei die Gesamtheit dieser Wände eine Hülle bildet, **dadurch gekennzeichnet, dass** die obere Wand (34) eine gekrümmte geschlossene Kontur und eine Oberfläche mit einer größeren Abmessung als die der unteren Wand (36) aufweist, deren Kontur ein Parallelogramm bildet, und dadurch, dass der Behälter eine doppelte Umfangswand (38), eine Innenwand (38a) in Form einer Kuppel und eine Außenwand (38b), die zumindest teilweise von der oberen Wand (34) zur unteren Wand (36) nach innen geneigt ist, umfasst.

2. Behälter nach Anspruch 1, **dadurch gekennzeichnet, dass** die obere Wand (34) abnehmbar ist, um eine Abdeckung zu bilden.

3. Behälter nach Anspruch 2, **dadurch gekennzeichnet, dass** die obere Wand (34) am Umfang eine vertikale Kante (42) und die Umfangswand (38) einen vertikalen oberen äußersten Rand (44) mit einer entsprechenden Abmessung aufweist, so dass die vertikale Kante (42) der oberen Wand den Rand (44) der Umfangswand umgibt.

4. Behälter nach einem der Ansprüche 1 bis 3, **dadurch gekennzeichnet, dass** die untere Wand (36) eine rechteckige Form aufweist.

5. Behälter nach einem der Ansprüche 1 oder 4, **dadurch gekennzeichnet, dass** die obere Wand (34) eine Scheibenform aufweist.

6. Behälter nach einem der Ansprüche 1 bis 5, **dadurch gekennzeichnet, dass** die Umfangswand (38) von vier Platten (38', 38") gebildet ist, deren Unterkante (48) geradlinig und deren Oberkante (50) gebogen ist.

7. Behälter nach einem der Ansprüche 1 bis 6, **dadurch gekennzeichnet, dass** er einen integrierten quaderförmigen Sockel (52) umfasst.

## Claims

1. Storage and transportation container (1) for a radome (2) comprising a top wall (34) and bottom wall (36) that are planar and parallel to one another and a peripheral wall (38), the set of these walls forming an enclosure, **characterized in that** the top wall (34) has a closed curved outline and a surface of a dimension greater than that of the bottom wall (36) whose outline forms a parallelogram and **in that** the container comprises a double peripheral wall (38), an inner wall (38a) in dome form and an outer wall (38b) at least partially inclined inwards from the top wall (34) to the bottom wall (36).

2. Container according to Claim 1, **characterized in that** the top wall (34) is removable to form a cover.

3. Container according to Claim 2, **characterized in that** the top wall (34) has a vertical flange (42) at the periphery and the peripheral wall (38) has a vertical top end edge (44) of corresponding dimension such that the vertical flange (42) of the top wall encircles the edge (44) of the peripheral wall.

4. Container according to one of Claims 1 to 3, **characterized in that** the bottom wall (36) has a rectangular form.

5. Container according to either of Claims 1 and 4, **characterized in that** the top wall (34) has a disc form.

6. Container according to one of Claims 1 to 5, **characterized in that** the peripheral wall (38) is composed of four panels (38', 38'') whose bottom edge (48) is rectilinear and top edge (50) is curved.

7. Container according to one of Claims 1 to 6, **characterized in that** it comprises an integrated parallelepipedal base (52).
